# EUROPÄISCHE PATENTSCHRIFT

(11) **EP 4 169 689 B1**
(45) Veröffentlichungstag und Bekanntmachung des Hinweises auf die Patenterteilung: **23.07.2025**
(21) Anmeldenummer: 22197312.6
(22) Anmeldetag: 23.09.2022
(51) Int. Cl.: B29B 17/00, B29B 17/02, B29B 17/04, B02C 13/00

(54) **VERFAHREN ZUR HERSTELLUNG EINES PARTIKULÄREN REZYKLATS AUS QUARZKOMPOSIT**
METHOD FOR PRODUCING A PARTICULATE QUARTZ COMPOSITE RECYCLED MATERIAL
PROCÉDÉ DE PRÉPARATION D'UN RECYCLAGE PARTICULAIRE EN COMPOSITE DE QUARTZ

(30) Priorität: 22.10.2021 DE 102021127484
(43) Veröffentlichungstag der Anmeldung: 26.04.2023
(73) Patentinhaber: Schock GmbH, 94209 Regen (DE)
(72) Erfinder: Orendorz, Dr. Adam, 94227 Zwiesel (DE); Rösener, Thomas, 94469 Deggendorf (DE); Sperberg, Raphael, 01705 Freital (DE)
(74) Vertreter: Lindner Blaumeier Patent- und Rechtsanwälte

(56) Entgegenhaltungen:
- EP-A1- 0 635 308
- WO-A1-2016/177662
- JP-A- H10 249 860
- UNKNOWN PROJECT: "LIFE Project Number LIFE GREEN SINKS Project Data", 31 December 2015 (2015-12-31), pages 1 - 24, XP093021198, Retrieved from the Internet <URL:https://webgate.ec.europa.eu/life/publicWebsite/index.cfm?fuseaction=search.dspPage&n_proj_id=4523> [retrieved on 20230206]
- UNKNOWN: "Guidance Notes on Project Reporting FP7 Collaborative Projects, Networks of Excellence, Coordination and Support Actions, Research for the benefit of Specific Groups (in particular SMEs) CONTENTS", 31 December 2012 (2012-12-31), pages 1 - 38, XP093021308, Retrieved from the Internet <URL:https://ec.europa.eu/research/participants/data/ref/fp7/89692/project-reporting_en.pdf> [retrieved on 20230206]

## Beschreibung

Die Erfindung betrifft ein Verfahren zur Herstellung eines partikulären Rezyklats aus Quarzkomposit durch Zerkleinern von Quarzkomposit-Formteilen aus einer Polymermatrix mit darin eingebetteten anorganischen Füllstoffpartikeln.

Quarzkomposit-Formteile sind in unterschiedlicher Form bekannt. So werden beispielsweise Küchenspülen, Ablageplatten, Sanitärgegenstände wie Duschtassen oder Duschwannen, aber auch Boden- oder Wandplatten, Leistensteine oder ähnliches aus Quarzkomposit hergestellt. Diese Formteile bestehen primär aus einer Polymermatrix, beispielsweise auf Basis eines Acrylats, wobei in die ausgehärtete Polymermatrix Füllstoffpartikel eingebettet sind. Hierbei kann es sich um anorganische oder organische Füllstoffpartikel handeln. Als ein solcher Füllstoff wird beispielsweise Quarzsand verwendet. Häufig sind auch Farbpigmente in die Polymermatrix eingebettet, um dem Formteil eine bestimmte Farbe zu verleihen.

Im Laufe der Zeit fallen zwangsläufig nicht mehr benötigte, gebrauchte Formteile an, entweder weil sie nach längerer Zeit im Rahmen von Sanierungs- oder Umbaumaßnahmen ausgetauscht werden, weil sie defekt sind oder aus anderen Gründen. Natürlich fallen auch im Rahmen der Produktion von neuen Formteilen entsprechende Ausschussteile an, die nicht für den Verkauf verwendet werden können. Mit zunehmender Verwendung solcher Quarzkomposit-Formteile nimmt damit zwangsläufig auch die Menge an nicht mehr gebrauchten Altteilen zu. Diese werden zumeist in Entsorgungsbetrieben entsorgt.

Der Bericht "LIFE Project Number LIFE GREEN SINKS Project data", 31.

Dezember 2015 (2015-12-31), Seiten 1-24, XP093021198, zu finden im Internet unter

URL:http://webgate.ec.europa.eu/life/publicWebsite/index.cfm?fuseaction=search. dspPage&n_proj_id=4523
beschreibt eine Untersuchung zum Recyceln von Quarzkomposit-Formteilen, im Konkreten von Küchenspülen.

JP H10 249860 A beschreibt die Verwendung eines recycelten Pulvers als Zuschlag zu einem synthetischen Harz, aus dem ein Formkörper hergestellt wird.

Der Erfindung liegt daher das Problem zugrunde, ein Verfahren anzugeben, das die Weiterverwertung solcher Quarzkomposit-Formteile ermöglicht.

Zur Lösung dieses Problems ist ein Verfahren zur Herstellung eines partikulären Rezyklats aus Quarzkomposit gemäß Patentanspruch 1 vorgesehen.

Bei dem erfindungsgemäßen Verfahren werden vorzerkleinerte Formteilstücke in einer Hammermühle zerkleinert, während welcher Zerkleinerung auch in ausreichendem Umfang Partikel anfallen, die in einem Zielkorngrößenbereich liegen, den das partikuläre Rezyklat aufweisen soll. In einer solchen Hammermühle erfolgt die Zerkleinerung des Mahlguts durch kinetische Schlag- und Prallzerkleinerung. An einem Rotor ist eine Vielzahl beweglicher Hämmer angebracht, die über den Rotor im Mühlengehäuse rotieren. Die Hämmer schlagen auf das Mahlgut, also die Formteilstücke, wodurch diese zerkleinert werden. Darüber hinaus werden die zerkleinerten Stücke auch gegen die Gehäusewand geschleudert, wodurch sie weiter gebrochen werden. Während der Verweilzeit des Mahlguts im Gehäuse wird das Mahlgut aufgrund der relativ hohen Rotationsgeschwindigkeit des Rotors und damit der Hämmer kontinuierlich geschlagen und weiter zerkleinert. Hierbei bilden sich entsprechend kleine Partikel, die zu einem beachtlich hohen Anteil eine Korngröße aufweisen, die im Bereich einer gewünschten Zielkorngröße liegt oder als Feinanteil auch kleiner ist.

Es hat sich nun überraschend herausgestellt, dass das Mahlgut, also die Formteilstücke, in einer solchen Hammermühle bei Raumtemperatur ausreichend zerkleinert werden, wobei einerseits in nur einem Mahlgang ein hinreichend großer Anteil an das Rezyklat bildenden Partikeln mit einer gewünschten Korngrößenverteilung anfällt, und es andererseits mit besonderem Vorteil nicht zu einer Verklumpung respektive Brikettierung, also zur Bildung von großen Partikeln kommt, die nicht als Rezyklat verwendet werden können, insbesondere als einer Gießmasse für die Herstellung von Neuteilen zuzugebendes Rezyklat. In anderen Mühlen wie beispielsweise einer Walzenmühle erfolgt die Zerkleinerung durch Scheren des Mahlguts, das heißt, dass eine hohe Scherenergie eingebracht wird. Diese Scherenergie führt anzunehmenderweise zu einer Erwärmung der gebrochenen Partikel, die wiederum zu einer Erweichung der Polymermatrix, zumindest im Bereich der Oberfläche, führt. Die einzelnen Partikel werden daher leicht klebrig, was die Ursache für das Verklumpen respektive die Brikettierung sein dürfte. Überraschend hat sich nun herausgestellt, dass solche Vorgänge in einer Hammermühle nicht stattfinden, da dort das Material keiner Scherbeanspruchung unterworfen ist, sondern lediglich Schlagenergie zugeführt wird, oder Prallenergie beim Schleudern gegen die Gehäusewand. Diese Energien respektive Energieeinträge führen nicht zu einer übermäßigen Erwärmung der Partikel, sodass es überraschenderweise nicht zu einer oberflächlichen Klebrigkeit und damit einer Verklumpung respektive Brikettierung kommt. Daher kann das Mahlgut in einer solchen Hammermühle vorteilhafterweise auch für längere Zeit gemahlen werden, was wiederum in einem hinreichend hohen Anteil der Partikelmenge resultiert, die innerhalb der Mahlzeit im Zielkorngrößenbereich liegt. Damit erlaubt das erfindungsgemäße Verfahren erstmals die Herstellung einer ausreichend großen, das Rezyklat bildenden Partikelmenge und andererseits die Produktion derselben in wirtschaftlich sinnvoller Weise. Folglich erlaubt das erfindungsgemäße Verfahren ein zweckmäßiges Recycling entsprechender Altteile aus Quarzkomposit unter Bildung eines partikulären Rezyklats, das als Zuschlagstoff wiederverwendet werden kann, beispielsweise eben als Zuschlagstoff zu einer Gießmasse zur Herstellung von Quarzkomposit-Neuteilen.

In einer zur beanspruchten Erfindung alternativen Ausgestaltung kann vorgesehen sein, dass über ein Sieb eine Partikelfraktion enthaltend das Rezyklat bildende, eine maximale Zielkorngröße aufweisende Partikel abgezogen wird. Gemäß dieser ersten Erfindungsausgestaltung wird aus der Hammermühle über ein Sieb nur die Partikelfraktion abgezogen, die Partikel enthält, die die Zielkorngröße aufweisen oder eine kleinere Korngröße besitzen, einschließlich eines etwaigen, sehr kleinen Feinanteils. Beträgt beispielsweise die Zielkorngröße 1,0 mm, so wird als Partikelfraktion folglich die Partikelmenge abgezogen, die Partikel mit einer Korngröße von maximal 1,0 mm oder weniger umfasst. Größere Partikel bleiben in der Hammermühle und können weiterbearbeitet werden, bis auch sie entsprechend weit zerkleinert sind und abgezogen werden. Hier erfolgt also unmittelbar nur der, vorzugsweise kontinuierliche, Abzug der Zielfraktion. Dabei kann die Zielkorngröße 1,0 mm, insbesondere 0,8 mm betragen. Eine solche Zielkorngröße ist dann zweckmäßig, wenn das partikuläre Rezyklat als Zuschlagsstoff zu einer Gießmasse für die Herstellung von neuen Quarzkomposit-Formteilen verwendet werden soll. Diese Zielkorngröße entspricht der maximalen Füllstoffkorngröße der in der Gießmasse und damit im neuen Produkt vorhandenen anorganischen oder organischen Füllstoffe. Die einzelnen Rezyklatpartikel bestehen zu einem Anteil aus der Polymermatrix und enthalten anorganische oder organische Füllstoffpartikel, wie sie im rezyklierten Altteil vorhanden waren. Über die Rezyklatpartikel kann nun der Gießmasse ein bestimmter Füllstoffanteil aus "Altfüllstoffen" zugeführt werden, wobei aufgrund der Wahl der Zielkorngröße der Rezyklatpartikel sichergestellt ist, dass die hierüber zugeführten Füllstoffpartikel in jedem Fall maximal die Füllstoffkorngröße, wie sie im neuen Formteil enthalten sein soll, aufweisen.

Eine alternative Verfahrensausgestaltung (erfindungsgemäß) zur vorstehend beschriebenen nicht erfindungsgemäßen Variante bei der aus der Hammermühle direkt die Zielfraktion abgezogen wird, sieht dem gegenüber vor, dass über ein Sieb eine erste Partikelfraktion mit einer maximalen Korngröße, die größer ist als die Zielkorngröße der das Rezyklat bildenden Partikel, aus der Hammermühle abgezogen wird, wonach in einer nachgeschalteten Siebeinrichtung aus der ersten Partikelfraktion eine zweite Partikelfraktion enthaltend das Rezyklat bildende Partikel mit einer Korngröße, die gleich oder kleiner der Zielkorngröße ist, abgezogen wird und von einer dritten Partikelfraktion enthalten Partikel, die größer als die Zielkorngröße sind, getrennt wird. Bei dieser Verfahrensausgestaltung wird folglich aus der Hammermühle eine erste Partikelfraktion, die gröber ist als die eigentliche Zielfraktion, abgesiebt und anschließend in einer Siebeinrichtung zur Abtrennung der gewünschten Zielfraktion, der zweiten Partikelfraktion, gesiebt. Es findet folglich in der Siebeinrichtung eine Klassierung der Rezyklatpartikel der der Hammermühle entnommenen, groben ersten Partikelfraktion statt. Über das Sieb der Hammermühle, über das die erste Partikelfraktion abgezogen wird, kann nicht nur die maximale Korngröße der ersten Partikelfraktion definiert werden, sondern auch die Verweilzeit des Mahlguts in der Mühle variiert werden. Je größer das Sieb respektive die Sieböffnungen und damit die maximale Korngröße, um so kürzer ist die Verweilzeit des Mahlguts in der Hammermühle, je kleiner das Sieb respektive die maximale Korngröße, umso länger ist die Verweilzeit des Mahlguts in der Hammermühle, da eine stärkere Zerkleinerung erforderlich ist, um das Sieb zu passieren. Damit einhergeht auch, dass der Feinanteil, also der Anteil an Partikeln, die eine sehr kleine Korngröße aufweisen, die auch deutlich unterhalb der Zielkorngröße der Zielfraktion ist, je nach verwendeter Siebgröße variiert. Bei größerem Sieb und damit kürzerer Verweilzeit ist der Feinanteil kleiner, während er bei kleinerem Sieb und längerer Verweilzeit größer ist.

Gemäß dieser Verfahrensvariante fallen folglich an der Siebeinrichtung zwei separate Fraktionen an, nämlich die zweite Partikelfraktion, die das Rezyklat bildende Partikel enthält, die gleich oder kleiner der Zielkorngröße sind, sowie die dritte Partikelfraktion, die Partikel enthält, die größer als die Zielkorngröße sind. Dabei kann die zweite Partikelfraktion entweder als finale Zielfraktion verwendet werden, sie kann aber auch, worauf nachfolgend noch eingegangen wird, weiter klassiert werden. Die dritte Partikelfraktion kann ebenfalls weiterverwendet werden, wenn gewünscht, worauf nachfolgend ebenfalls noch näher eingegangen wird.

Die maximale Korngröße der ersten Partikelfraktion kann gemäß einer Weiterbildung der Erfindung 5 mm, insbesondere 4 mm betragen. Das heißt, dass das Sieb der Hammermühle eine entsprechende Siebweite von 5 mm, insbesondere 4 mm aufweist, wobei zur Klassierung bevorzugt ein Stabrostsieb verwendet werden kann, das eine hinreichend große Siebfläche zur Verfügung stellt, die eine Reduzierung der Verweilzeit der Partikel in der Hammermühle ermöglicht. Eine maximale Korngröße < 4 mm ist zwar grundsätzlich denkbar, jedoch steigt dann der Feinanteil, also der Anteil an Partikeln, die eine Korngröße deutlich kleiner als die Zielkorngröße aufweisen, beachtlich.

Auch hier sollte die Zielkorngröße 1,0 mm, insbesondere 0,8 mm betragen. Dies gilt insbesondere dann, wenn die Rezyklatpartikel einer Quarzkomposit-Gießmasse zur Herstellung von neuen Formteilen als Zuschlag zugegeben werden soll. Wiederum entspricht auch bei dieser Verfahrensvariante die Zielkorngröße im Wesentlichen der maximalen Füllstoffkorngröße der im neuen Formteil vorhandenen anorganischen oder organischen Füllstoffe.

Wie beschrieben fällt bei dieser zweiten erfindungsgemäßen Verfahrensvariante eine dritte Partikelfraktion an, die Partikel enthält, die größer als die maximale Zielkorngröße der zweiten Partikelfraktion ist. Bevorzugt ist es, diese dritte Partikelfraktion zur Hammermühle für eine weitere Zerkleinerung zurückzuführen. Das heißt, dass diese noch zu großen Partikel erneut in der Hammermühle bearbeitet und zerkleinert werden, bis sie eine Korngröße aufweisen, die im Bereich der Zielkorngröße oder kleiner ist, sodass sie in dem nachgeschalteten Siebschritt in der Siebeinrichtung der zweiten Partikelfraktion zufallen. Das heißt, dass bezüglich der dritten Partikelfraktion eine Rückführung erfolgt, die auch mehrfach erfolgen kann, sodass, ausgehend von einer aufgegebenen Füllmenge an Formteilstücken, eine Ausbeute an partikulärem Rezyklat von nahezu 100 % möglich ist.

Wie vorstehend beschrieben, sind die zerkleinerten Partikel der ersten Partikelfraktion von der Hammermühle zur Siebeinrichtung respektive die Partikel der dritten Partikelfraktion aus der Siebeinrichtung zurück zur Hammermühle zu führen. Diese Überführung kann manuell erfolgen, das heißt, dass Material von einer Bedienperson manuell von der Hammermühle zur Siebeinrichtung respektive von der Siebeinrichtung zur Hammermühle transportiert und dort aufgegeben wird.

Bevorzugt jedoch erfolgt ein automatischer Transport über eine entsprechende Transporteinrichtung. So kann eine solche Transporteinrichtung für die Überführung der ersten Partikelfraktion beispielsweise ein Förderband, beispielsweise Z-Förderer sein, der die erste Partikelfraktion von der Hammermühle zur Siebeinrichtung führt. Ein Z-Förderer ist zweckmäßig, da an der Hammermühle die erste Partikelfraktion bevorzugt nach unten abgezogen wird, während sie der Siebeinrichtung von oben zugeführt wird, wobei die entsprechenden zweiten und dritten Partikelfraktionen an der Siebeinrichtung wiederum bevorzugt unten abgezogen werden.

Für den Transport der dritten Partikelfraktion von der Siebeinrichtung zurück zur Hammermühle kann ebenfalls ein Transportband vorgesehen werden, beispielsweise eine vibrierende Rinne oder ähnliches.

Erfolgt beispielsweise ein manueller Transport der dritten Partikelfraktion, so kann die dritte Partikelfraktion beispielsweise in einem entsprechend großen Vorratsbehälter, beispielsweise einen Bigbag, gesammelt werden, und das gefüllte Vorratsbehältnis sodann über ein entsprechendes Transportmittel wie einen Hubwagen oder dergleichen zur Hammermühle transportiert werden, beispielsweise zu einem bodennah beginnenden Förderband, über das das aufzugebende Mahlgut nach oben zur Aufgabe der Hammermühle transportiert wird.

Der Betrieb der Hammermühle wie auch der Siebeinrichtung kann grundsätzlich ein kontinuierlicher sein, das heißt, dass der Hammermühle kontinuierlich vorzerkleinerte Formteilstücke und, sofern vorgesehen, Partikel der dritten Partikelfraktion zugeführt werden, und Partikel kontinuierlich abgezogen werden und auch kontinuierlich der Siebeinrichtung zugeführt werden, wo sie kontinuierlich in die entsprechenden Fraktionen gesiebt werden. Über einen solchen kontinuierlichen Prozess kann demzufolge mit beachtlich hohem Durchsatz gefahren werden. Alternativ dazu kann natürlich auch ein intermittierender Prozess vorgesehen sein, im Rahmen dessen nur eine bestimmte Menge an Mahlgut verarbeitet wird, ohne dass kontinuierlich neues Mahlgut nachgeführt wird. Dies erfolgt erst, wenn das aufgegebene Mahlgut vollständig verarbeitet ist.

Wie beschrieben wird in der Siebeinrichtung aus der ersten Partikelfraktion eine zweite Partikelfraktion über ein Sieb, bei dem es sich um ein Maschensieb oder ähnliches handeln kann, abgetrennt. Diese zweite Partikelfraktion enthält Partikel, deren Korngröße maximal der Zielkorngröße entspricht, die aber auch kleiner und auch deutlich kleiner sein kann, das heißt, dass die zweite Partikelfraktion auch einen entsprechend hohen Feinanteil aufweist, also von sehr feinen Partikeln mit sehr kleiner Korngröße. Beträgt die Zielkorngröße beispielsweise 1,0 mm oder 0,8 mm, so sind in der zweiten Fraktion auch Partikel enthalten, die Korngrößen von nur 0,2 mm, 0,1 mm oder noch feiner aufweisen, bis hin zu pulverförmigen Partikeln, die also letztlich nicht mehr als Granulat anzusprechen sind. Grundsätzlich kann die zweite Partikelfraktion, also die Zielfraktion, beispielsweise als Zuschlag für eine Gießmasse auch den Feinanteil enthalten. Sofern der Feinanteil jedoch nicht gewünscht wird, sieht eine zweckmäßige Weiterbildung der Erfindung vor, dass in der Siebeinrichtung oder einer weiteren Siebeinrichtung aus der zweiten Partikelfraktion eine vierte Partikelfraktion mit einer maximalen Korngröße, die kleiner als die Zielkorngröße ist, durch Sieben gebildet und abgezogen wird, sodass eine fünfte Partikelfraktion enthaltend die das Rezyklat bildenden Partikel verbleibt und abgezogen wird. In der Siebeinrichtung erfolgt also in einer zweiten Siebebene eine weitere Klassierung der zweiten Partikelfraktion. Diese wird in eine vierte Partikelfraktion, die den abzuziehenden, nicht gewünschten Feinanteil enthält, und eine fünfte Partikelfraktion, die dann der finalen Zielfraktion entspricht, aufgetrennt. Hierzu wird über ein weiteres Sieb, beispielsweise ein Maschensieb, eine maximale Korngröße der vierten Partikelfraktion, also der Feinanteilfraktion definiert, sodass diese vierte Partikelfraktion nur Partikel enthält, die diese Korngröße aufweist oder die noch feiner sind. Die finale fünfte Partikelfraktion, also die Zielfraktion, enthält dann nur noch Rezyklatpartikel, deren Korngröße im Bereich zwischen der Zielkorngröße und der maximalen Korngröße dieser zweiten Siebebene liegt. Damit enthält die Zielfraktion letztlich keinen oder nur einen vernachlässigbaren Feinanteil, was Vorteile in Bezug auf die Rheologie der Gießmasse, der die Rezyklatpartikel zugegeben werden, haben kann. Erfolgen beide Siebungen in einer gemeinsamen Siebeinrichtung, so sind einander nachgeschaltete entsprechende Siebstufen vorgesehen. Kommen zwei separate Siebeinrichtungen zum Einsatz, so können diese z.B. über eine Transporteinrichtung verbunden sein, über die die zweite Partikelfraktion automatisch zur zweiten Siebeinrichtung transportiert wird.

Die maximale Korngröße der vierten Partikelfraktion sollte 0,1 mm, insbesondere 0,2 mm betragen. Je größer diese maximale Korngröße ist, umso kleiner ist das Intervall, in dem die Korngrößen der finalen Rezyklatpartikel liegen.

Erfindungsgemäß werden zum Sieben der ersten Partikelfraktion und/oder zum Sieben der zweiten Partikelfraktion jeweils Maschensiebe verwendet wird, die eine definierte Maschenweite haben, was eine entsprechende Trennung und Klassierung der Fraktionen ermöglicht.

Besonders bevorzugt werden als Ausgangsmaterial für das erfindungsgemäße Verfahren Formteilstücke verwendet, die in einer Polymermatrix eingebettete anorganische und/oder organische Füllstoffpartikel mit einem Anteil von ≥ 60 Gewichtsprozent (Gew.%), insbesondere ≥ 65 Gew.% aufweisen. Die Formteilstücke sollten also einen Mindestanteil an anorganischen und/oder organischen Füllstoffpartikeln enthalten, der bei mindestens 60 Gew.%, vorzugsweise aber darüber liegen sollte. Das heißt, dass der Anteil an Polymermatrix nicht allzu groß sein sollte, nachdem Ziel ist, über das Rezyklat insbesondere Füllstoffe rückzuführen, also als recycelte Füllstoffe einer Gießmasse für die Neuherstellung von Formteilen zuzuführen.

Neben dem Zerkleinern von verschiedenfarbigen Kompositmaterialien können mit dem beschriebenen Verfahren bevorzugt auch Formteilstücke mit im Wesentlichen der gleichen Farbe gemeinsam in der Hammermühle zerkleinert werden. Hieraus resultiert, dass auch die Rezyklatpartikel der Zielfraktion letztlich eine einheitliche Farbe aufweisen können. Wie ausgeführt enthalten Formteile, also auch die recycelten Formteile, üblicherweise Farbpigmente, die ihnen eine individuelle Farbe verleihen. Diese Farbpigmente werden im Rahmen der Neuherstellung üblicherweise über eine Farbpaste der Gießmasse zugeführt. Nachdem die Neuteile ebenfalls eine bestimmte Farbe aufweisen sollen, und nachdem zwangsläufig auch die Rezyklatpartikel Farbpigmente enthalten, muss sichergestellt werden, dass über die Rezyklatpartikel die über die Farbpaste definierte Zielfarbe des neuen Formteils nicht verändert wird. Daher werden erfindungsgemäß bevorzugt nur sortenreine, also farbgleiche Formteilstücke gemeinsam zerkleinert, sodass die Rezyklatpartikel eine einheitliche Farbe aufweisen. Natürlich müssen die Formteilstücke nicht komplett farbidentisch sein, vielmehr können auch Formteilstücke, die geringfügig in der Farbe variieren, gemeinsam verarbeitet werden, beispielsweise anthrazitgraue Formteile zusammen mit schwarzen Formteilen oder ähnliches, wobei natürlich das Verhältnis der Menge an Formteilen mit unterschiedlicher Farbe letztlich die finale Mischfarbe definiert.

Die vorzerkleinerten, üblicherweise unregelmäßig geformten Formteilstücke sollten bevorzugt eine maximale Länge von ca. 40 cm, insbesondere von ca. 30 cm aufweisen. Dabei können die Formteilstücke entweder durch manuelles Zertrümmern der zu recycelten Formteilen hergestellt werden, oder mittels eines geeigneten Vorzerkleinerungsverfahrens, beispielsweise mittels eines Walzenverdichters in einem Container oder dergleichen, wo die Formteile mittels einer schweren Walze entsprechend gebrochen werden.

Die Formteilstücke selbst können der Hammermühle entweder manuell oder mittels einer Transporteinrichtung wie einem Transportband automatisch zugeführt werden.

Als Formteile, die verarbeitet werden, können unterschiedliche Quarzkomposit-Formteile verwendet werden. Bevorzugt werden solche Formteile verarbeitet, die den herzustellenden Formteilen entsprechen, da die materialmäßige Zusammensetzung der Alt-Formteile im Wesentlichen der der neu herzustellenden Formteile entspricht. Werden also als neue Formteile Küchenspülen hergestellt, so sollten erfindungsgemäß als Alt-Formteile im Rahmen des erfindungsgemäßen Verfahrens ebenfalls Küchenspülen verwendet werden. Werden solche Küchenspülen aus unterschiedlichen Gießmassenzusammensetzungen hergestellt, bestehen die Küchenspülen also aus unterschiedlichen Materialkompositionen, so ist es darüber hinaus auch denkbar, dass zur Herstellung des jeweils der Gießmasse zuzuschlagenden Rezyklats auch nur solche Alt-Küchenspülen verwendet werden, die in ihrer Materialkomposition der der neu herzustellenden Küchenspüle entsprechen. Diese weitere Spezifizierung ist jedoch nicht zwingend.

Weiterhin betrifft die Erfindung die Verwendung eines partikulären Rezyklats gemäß Patentanspruch 16.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer Vorrichtung zur Herstellung eines partikulären Rezyklats aus Quarzkomposit gemäß dem erfindungsgemäßen Verfahren,
- Fig. 2: ein Flussdiagramm zur Erläuterung des erfindungsgemäßen Verfahrens
- Fig. 3: ein Diagramm zur Darstellung der Korngrößenverteilung dreier verschiedener Mahlgüter,
- Fig. 4: ein Diagramm zur Darstellung zum Einfluss der Korngröße auf den Produktaustrag durch ein Sieb bzw. einen Austrittsspalt,
- Fig. 5: ein Diagramm zur Darstellung der Korngrößenverteilung in verschiedenen aufeinander folgenden Mahlgängen, und
- Fig. 6: ein Diagramm zur Darstellung der Korngrößenverteilung aufeinanderfolgend gemahlener, jeweils einem vorherigen Mahlvorgang entnommener Mahlgüter.

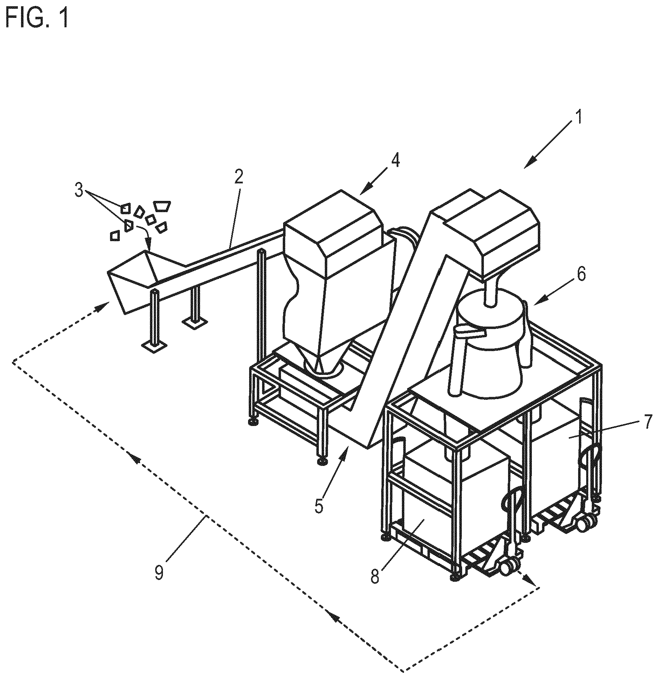

Fig. 1 zeigt eine Vorrichtung 1 zur Herstellung eines partikulären Rezyklats aus Quarzkomposit. Die Vorrichtung 1, die eine reine Prinzipdarstellung ist, umfasst eine erste Transporteinrichtung 2, beispielsweise ein Bandförderer, auf welche Transporteinrichtung 2 vorzerkleinerte Formteilstücke 3 gegeben werden. Diese vorzerkleinerten Formteilstücke 3 sind Bruchstücke eines Quarzkomposit-Formteils und bestehen, wie dieses Formteil, aus einer Polymermatrix mit darin eingebetteten anorganischen und/oder organischen Füllstoffpartikeln und zumeist auch Farbpigmenten. Die zur Bildung der Formteilstücke 3 zerkleinerten Formteile sind beispielsweise nicht mehr gebrauchte oder nicht gebrauchsfähige Küchenspülen.

Mittels der ersten Transporteinrichtung 1 werden die Formteilstücke 3 zu einer Hammermühle 4 gebracht, wo sie über das rotierende Hammer- oder Schlagwerk zerkleinert werden. Hierbei werden die Formteilstücke 3 über die rotierenden Hämmer zerschlagen, das heißt, dass der Zerkleinerungsprozess durch Einbringen von Schlagenergie erwirkt wird, verbunden damit, dass die zerkleinerten Stücke zusätzlich aufgrund der relativ hohen Rotationsgeschwindigkeit des Rotors respektive der Hämmer von mehreren 10m/s gegen die Mühlenwand geschleudert werden, wo sie ebenfalls zerbrechen.

**In** der Hammermühle 4 ist ein nicht näher gezeigtes Sieb integriert, über das eine erste Partikelfraktion mit einer maximalen Korngröße, die größer ist als die Zielkorngröße der das Rezyklat bildenden Partikel, abgetrennt werden kann. Das heißt, dass durch dieses Sieb, beispielsweise ein Stabrostsieb, Partikel fallen, mit einer Korngröße, die der über das Sieb definierten maximalen Korngröße entspricht oder die kleiner ist als diese maximale Korngröße. Die nicht durch das Sieb fallenden Teile bleiben in der Hammermühle und werden weiterhin geschlagen und folglich zerkleinert, bis auch sie das Sieb passieren können.

Die erste Partikelfraktion wird sodann mittels einer zweiten Transporteinrichtung 5, im gezeigten Beispiel einem Z-Förderer mit einem entsprechenden Förderband, zu einer Siebeinrichtung 6 transportiert und der Siebeinrichtung 6 aufgegeben. Dort wird die erste Partikelfraktion in mindestens einer Siebebene gesiebt, um eine zweite Partikelfraktion zu bilden, die das Rezyklat bildende Partikel enthält. Diese Partikel der zweiten Partikelfraktion weisen eine Korngröße auf, die gleich oder kleiner der Zielkorngröße ist. Des Weiteren wird eine dritte Partikelfraktion gebildet, die die Partikel enthält, die größer sind als die Zielkorngröße. Das heißt, dass in der Siebeinrichtung 6 eine Klassierung der relativ groben ersten Partikelfraktion erfolgt, um einerseits ein Partikelvolumen enthaltend die Partikel, die letztlich im Zielkorngrößenbereich liegen oder kleiner sind, zu bilden, und um eine dritte Partikelfraktion enthalten Partikel, die größer sind als diese Zielkornpartikelmenge, zu bilden.

Die zweite Partikelfraktion kann im gezeigten Ausführungsbeispiel von der Siebeinrichtung 6 in ein für den Abtransport z.B. auf einem dargestellten Hubwagen vorgesehenes Aufnahmebehältnis 7 eingebracht und dort gesammelt werden, bis ein bestimmter Füllgrad erreicht ist, wonach diese zweite Partikelfraktion final abgezogen wird und ihrer weiteren Verwendung beispielsweise als Zuschlagstoff zu einer Gießmasse für die Herstellung von neuen Küchenspülen zugeführt wird.

Auch die dritte Partikelfraktion wird in einem geeigneten Aufnahmebehälter 8 aufgenommen. Da diese dritte Partikelfraktion aus Partikeln besteht, die nicht in den Zielkorngrößenbereich fallen, mithin also noch zu groß sind, werden sie, wie durch die gestrichelte, einen Transportweg andeutende Linie 9 dargestellt ist, der ersten Transporteinrichtung 2 zugeführt, wo sie aufgegeben werden und erneut der Hammermühle 4 zugeführt werden, um nochmals gemahlen zu werden. Das heißt, dass eine Rückführung der zu großen, dritten Partikelfraktion erfolgt. Durch das erneute Vermahlen wird ein hinreichend großer Partikelanteil weiter zerkleinert, sodass diese Partikel dann im Zielkornbereich liegen und nachfolgend der zweiten Partikelfraktion zufallen. Diese Rückführung der dritten Partikelfraktion zur ersten Transporteinrichtung 2 kann manuell erfolgen, beispielsweise durch Ziehen des hier dargestellten Hubwagens, über den das Aufnahmebehältnis 8 bewegt werden kann. Alternativ kann auch anstelle des Aufnahmebehältnisses 8 eine weitere Transporteinrichtung, beispielsweise eine Vibrationsrinne oder ein Transportband, vorgesehen sein, auf das die Partikel der dritten Partikelfraktion fallen bzw. gegeben werden, sodass sie automatisch zur ersten Transporteinrichtung 2 zurückgeführt werden.

Selbstverständlich kann auch die zweite Partikelfraktion, also die Zielfraktion, anstelle in das gezeigte Aufnahmebehältnis 7 auch auf eine abfördernde Transporteinrichtung wie ein Förderband gegeben werden, mittels der sie beispielsweise zu einer entfernten Verpackungsstation oder dergleichen transportiert wird.

Wie vorstehend beschrieben umfasst bei dem gezeigten Ausführungsbeispiel die Siebeinrichtung 6 nur eine Siebebene, über die die erste Partikelfraktion in die zweite und die dritte Partikelfraktion aufgetrennt wird. Die zweite Partikelfraktion beinhaltet wie ausgeführt Partikel, die maximal die Zielkorngröße aufweisen, die aber auch natürlich kleiner sein können, bis hin zu einem Feinanteil mit minimaler Korngröße, also Korngrößen kleiner 0,2 oder 0,1 mm. Dieser Feinanteil kann in der zweiten Partikelfraktion verbleiben, sofern er für die nachfolgende Weiterverarbeitung nicht stört. Er kann aber auch im Bedarfsfall abgetrennt werden. Hierzu weist die Siebeinrichtung eine zweite Siebebene auf, in der die zweite Partikelfraktion erneut gesiebt wird, sodass eine vierte Partikelfraktion gebildet wird, die nur den Feinanteil enthält, und eine fünfte Partikelfraktion, die dann die finale Zielpartikelfraktion ist. Diese weitere Siebebene, die, wie auch die erste Siebebene, mittels eines Maschensiebs oder dergleichen gebildet ist, definiert eine maximale Korngröße, die kleiner als die Zielkorngröße ist. Das heißt, dass die vierte Partikelfraktion, also die Feinanteilfraktion, nur Partikel enthält, die diese maximale Korngröße aufweisen oder kleiner sind, also den gesamten Feinanteil bis hin zum Pulver. Dem gegenüber enthält die fünfte Partikelfraktion nur Partikel, die kleiner oder gleich der Zielkorngröße und größer als diese maximale Korngröße der zweiten Siebebene sind. Die vierte und die fünfte Partikelfraktion werden sodann entsprechend abgezogen. Während die fünfte Partikelfraktion, also die Zielfraktion, der Wiederverwertung zugeführt wird, kann die vierte Partikelfraktion, also die Feinanteilfraktion, verworfen werden. Das heißt, dass in der in Fig. 1 gezeigten Vorrichtung statt eines Aufnahmebehältnisses 7 zwei solche Behältnisse vorgesehen werden. Das eine Aufnahmebehältnis nimmt die vierte Partikelfraktion, also den Fein- und Feinstanteil auf, während das andere Ausnahmebehältnis die finale fünfte Partikelfraktion aufnimmt.

Die maximale Korngröße der ersten Partikelfraktion, wie sie über das Sieb der Hammermühle 4 definiert wird, liegt beispielsweise bei 5 mm, insbesondere bei 4 mm. Die Spaltbreite des Siebes sollte nicht kleiner sein, da ansonsten der Feinanteil im Mahlprozess zu groß wird.

Die Zielkorngröße, die über die erste Siebebene der Siebeinrichtung 6 definiert wird, sollte ca. 1,0 mm vorzugsweise ca. 0,8 mm betragen.

Die maximale Korngröße, die den Feinanteil definiert, sollte ca. 0,1 mm, bevorzugt ca. 0,2 mm betragen. Dies führt dazu, dass die Korngröße der die finale vierte Partikelfraktion, also die Zielfraktion umfassenden Partikel letztlich ≤ 1,0 mm und > 0,1 mm, bevorzugt ≤ 0,8 mm > 0,2 mm ist.

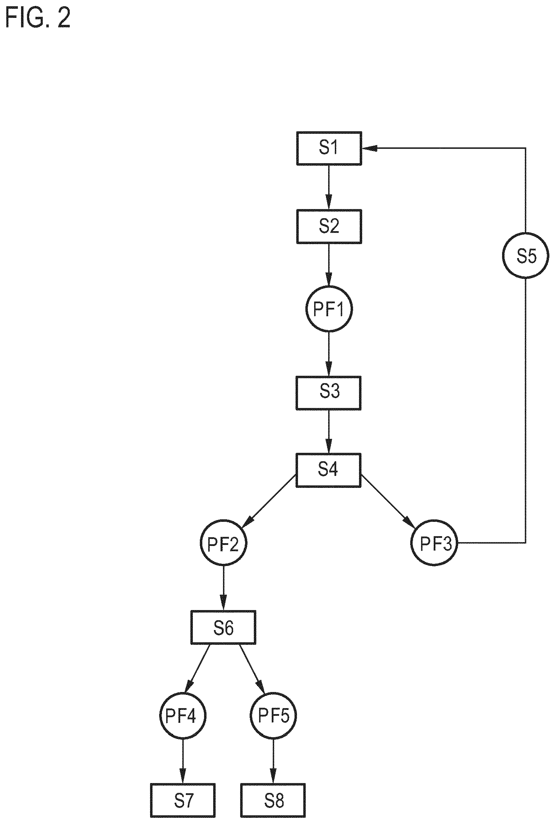

Fig. 2 zeigt ein Flussdiagramm, das die einzelnen verfahrensgemäßen Schritte dem Grunde nach zeigt, wie auch die entstehenden Partikelfraktionen.

Im Schritt S1 wird das Mahlgut, also die vorzerkleinerten Formteilstücke 3, auf die erste Transporteinrichtung 2 aufgegeben und der Hammermühle 4 zugeführt.

Im Schritt S2 wird das aufgegebene Mahlgut in der Hammermühle 2 gemahlen. Dieses Mahlen führt zur Bildung der ersten Partikelfraktion PF1.

Diese erste Partikelfraktion PF1 wird sodann im Schritt S3 über das Sieb der Hammermühle 4 aus der Hammermühle abgezogen und über die zweite Transporteinrichtung 5 der Siebeinrichtung 6 zugeführt und dort aufgegeben.

Im Schritt S4 wird die erste Partikelfraktion PF1 in der Siebeinrichtung 6 gesiebt, wobei die zweite Partikelfraktion PF2 und die dritte Partikelfraktion PF3 gebildet werden. Die Siebeinrichtung 6 weist hierzu ein eine erste Siebebene bildendes erstes Sieb, beispielsweise ein Maschensieb oder dergleichen, auf, über das die Zielkorngröße definiert wird. Diese liegt beispielsweise bei 1,0 mm oder 0,9 mm oder 0,8 mm, je nachdem, wie die maximale Zielkorngröße des finalen Rezyklats sein soll. Das heißt, dass die zweite Partikelfraktion PF2 Partikel mit einer Korngröße gleich oder kleiner der Zielkorngröße von z. B. 1,0 mm oder 0,8 mm aufweist.

Dem gegenüber umfasst die dritte Partikelfraktion PF3 nur Partikel, die größer als die Zielkorngröße sind, also eine Korngröße von größer 1,0 mm oder 0,8 mm aufweisen. Diese dritte Partikelfraktion PF3 wird nun gemäß Schritt S5 beispielsweise über eine Transporteinrichtung automatisch erneut der ersten Transporteinrichtung 2 zugeführt, sodass sie gemäß Schritt S1 wieder der Hammermühle 4 zugeführt wird, wo diese noch relativ großen Partikel erneut gemahlen werden und in den Mahl- und Siebkreislauf zurückgeführt werden.

Die zweite Partikelfraktion PF2 enthält wie ausgeführt Partikel, die kleiner oder maximal gleich der Zielkorngröße sind. Sie umfasst demzufolge auch einen entsprechenden Feinanteil, also Partikel, die sehr viel kleiner sind. Um diesen Feinanteil abzutrennen, wird, wie durch den Schritt S6 dargestellt ist, mittels der Siebeinrichtung 6 in einer zweiten Siebebene mittels eines zweiten Siebs, beispielsweise eines Maschensiebs oder dergleichen, die zweite Partikelfraktion PF2 gesiebt, um eine vierte Partikelfraktion PF4 und eine fünfte Partikelfraktion PF5 zu bilden. Die Siebweite des Siebs dieser zweiten Siebebene definiert wiederum eine maximale Korngröße, beispielsweise von 0,1 mm oder 0,2 mm, die sicherstellt, dass der ungewünschte Feinanteil ausgesiebt wird. Das heißt, dass die vierte Partikelfraktion PF4 nur sehr feine Partikel enthält, die den Feinanteil bilden.

Dem gegenüber enthält die fünfte Partikelfraktion PF5 nur Partikel, die im gewünschten Korngrößenintervall liegen, das nach obenhin über die Zielkorngröße definiert ist, also die bevorzugte Korngröße, und das nach unten über die maximale Korngröße, ab der der Feinanteil beginnt, begrenzt ist. Die fünfte Partikelfraktion PF5 enthält damit beispielsweise nur Partikel, die ≤ 0,8 mm und > 0,2 mm sind.

Im Schritt S7 wird die vierte Partikelfraktion abgezogen und kann beispielsweise verworfen werden, sofern der Feinanteil nicht anderweitig wiederverwertet werden kann. Die finalen, als Rezyklat weiterverarbeitbare fünfte Partikelfraktion PF5 hingegen wird gemäß Schritt S6 anschließend abgezogen, beispielsweise nachdem sie in einem Aufnahmebehälter aufgefangen wurde, oder mittels einer Transporteinrichtung oder ähnliches.

Im Rahmen von Untersuchungen wurden verschiedene Quarzkomposit-Materialien mittels einer Hammermühle gemahlen und das Mahlergebnis bestimmt.

In einem ersten Versuch wurde das Mahlverhalten dreier unterschiedlicher Quarzkomposit-Kompositionen untersucht. Ausgangsmaterial waren drei Quarzkomposit-Küchenspülen der Anmelderin, die aus unterschiedlichen Quarzkompositen bestanden.

Eine Spüle bestand aus dem unter dem Markennamen Cristalite^{®} bekannten Material der Anmelderin, die zweite Spüle bestand aus dem unter dem Markennamen Cristadur^{®} bekannten Material der Anmelderin, und die dritte Spüle aus dem Material Cristadur^{®} Green Line bekannten Material der Anmelderin.

Die Spülen aus dem Cristadur^{®}-Material weisen neben dem polymeren Bindemittel, das die Polymermatrix bildet und auf MMA basiert, sowie Farbpigmenten auch einen anorganischen Füllstoff in Form von Quarzsand zu einem Anteil von 68 - 75 Gewichtsprozent auf.

Die Spüle aus dem Cristalite^{®}-Material weist neben der polymeren Bindemittelmatrix und Farbpigmenten einen anorganischen Füllstoff in Form von Quarzsand zu einem Anteil von 70 - 75 Gewichtsprozent auf.

Aus den Spülen wurden Formteilbruchstücke gebildet, das heißt, die Spülen wurden vorzerkleinert, wobei die Bruchstücke eine Länge von 30 cm nicht überschritten. Um ausreichendes Mahlgut verarbeiten zu können, wurden jeweils mehrere identische Spülen des jeweiligen Spülentyps zerkleinert.

Zum Mahlen des Mahlguts wurde eine Hammermühle der Gebr. Jehmlich GmbH vom Typ HM 672 verwendet, die nach dem Prinzip der Schlag- und Prallwirkung arbeitet. Die rotierenden Hämmer schlagen das Mahlgut in dem Mahlraum. Wenn die erforderliche Feinheit erreicht ist, verlässt das Mahlgut durch ein Stabrostsieb nach unten den Mahlraum. Das Stabrostsieb hatte eine Spaltweite von 4 mm, worüber der Anteil größerer Partikel, die durch das Sieb gelangen, eingeschränkt wird.

In dieser Hammermühle wurde das jeweilige Mahlgut der verschiedenen Materialtypen gemahlen. Es wurde solange gemahlen, bis das gesamte aufgegebene Mahlgut gemahlen war.

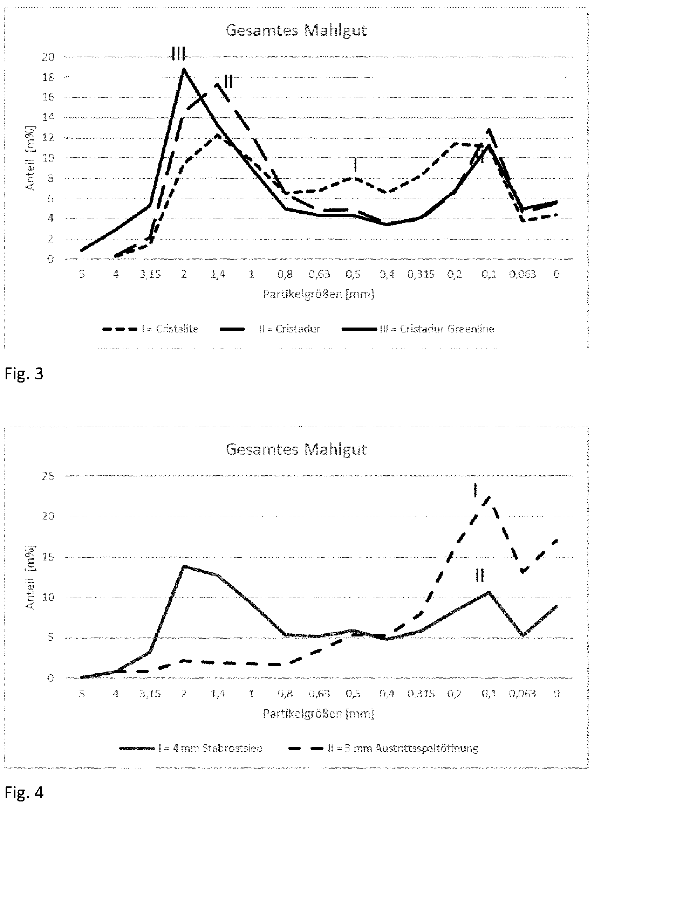

Das Ergebnis der Korngrößenverteilung der drei unterschiedlichen Mahlgüter ist in Figur 3 dargestellt.

Längs der Abszisse ist die Partikelgröße in mm angegeben, längs der Ordinate der jeweilige Anteil in Massenprozent.

Die mit I gekennzeichnete Kurve gibt die Partikelverteilung für das Material Cristalite^{®} an, die mit II gekennzeichnete Kurve die Verteilung für das Material Cristadur^{®} und die mit III gekennzeichnete Kurve die Verteilung für das Material Cristadur^{®} Greenline.

Es zeigt sich, dass das erhaltene Mahlgut aller untersuchten Kompositionen eine vergleichbare Korngrößenverteilung zeigen. Im Bereich zwischen ca. 3,0 - 1,0 mm stellt sich ein erster Peak ein, ein zweiter Peak stellt sich im Bereich zwischen 0,3 - 0,06 mm ein.

Eine Verklumpung respektive Brikettierung des jeweiligen Materials in der Hammermühle kam bei keinem der untersuchten Materialien vor, das heißt, dass das gesamte aufgegebene Mahlgut gemahlen werden konnte und über das Sieb abgezogen werden konnte.

Für die Herstellung neuer Formteile, also neuer Küchenspülen aus den jeweiligen Cristalite^{®}- oder Cristadur^{®}-Materialien werden bevorzugt anorganische Füllstoffe, also primär Quarzsand, mit einer maximalen Korngröße von ca. 0,8 mm verwendet. Aus diesem Grund eignet sich innerhalb des erhaltenen Mahlguts, wie vorstehend gezeigt, die jeweilige Partikelfraktion mit einer Korngröße ≤ 0,8 mm.

Die Mahlgutausbeute der vorstehend im Diagramm gezeigten Mahlversuche mit einer Partikelkorngröße ≤ 0,8 mm ist in der nachfolgenden Tabelle dargestellt:

| Material | Cristalite^{®} | Cristadur^{®} | Cristadur^{®} Greenline |
|---|---|---|---|
| Ausbeute ca. (%) | 60 | 48 | 45 |

Das heißt, dass jedes Material bereits im ersten Mahlgang derart zerkleinert werden kann, dass hier bereits ein hinreichend hoher Partikelanteil, der eine bestimmte Zielkorngröße aufweist oder kleiner ist, enthalten ist.

In einem weiteren Versuch wurde insbesondere der Einfluss der Austrittsöffnung auf die Verweildauer des Materials in der Mühle und die resultierende Korngrößenverteilung des Mahlgutes untersucht. Die Versuche wurden an einer Hammermühle HA800 der Fa. Erdwich Zerkleinerungssysteme GmbH mit variablem Austrittsspalt statt Stabrostsieb zum Produktaustrag durchgeführt. Die Austrittsspaltbreite betrug 3 mm. Dadurch, dass hier nur ein einzelner Austrittsspalt mit kleinerer Öffnungsbreite zum Produktaustrag vorhanden war, wurde die Verweildauer des Materials in der Mühle deutlich erhöht. Die Ergebnisse sind in Figur 4 gezeigt.

Längs der Abszisse ist wiederum die Partikelgröße in mm, also die Korngröße dargestellt, längs der Ordinate wieder der jeweilige massenprozentuale Anteil am Mahlgut. Die mit I gekennzeichnete Kurve gibt den Partikelgrößenverlauf für eine Stabrostsiebweite von 4 mm an, die mit II gekennzeichnete Kurve den Partikelgrößenverlauf für eine Austrittsspaltöffnung von 3 mm.

Ersichtlich ist, dass bei der Verwendung des 4 mm Stabrostsiebes der Hammermühle HM 672 der Fa. Jehmlich der Anteil an Partikeln mit einer Korngröße zwischen 4,0 - 0,5 mm deutlich größer als bei der Kurve II mit einer Austrittsspaltöffnung von 3 mm bei der Hammermühle HM800 der Fa. Erdwich ist. Diese Verhältnisse kehren sich ab einer Partikelgröße von ca. 0,5 mm um, das heißt, dass der Feinanteil beim zwangsläufig länger dauernden Mahlen mit der einzelnen Austrittsspaltöffnung von 3 mm deutlich größer ist als beim Mahlen mit einem Stabrostsieb, bei dem das Material deutlich früher ausgetragen wird und dadurch die Verweildauer deutlich verkürzt ist.

Wird auch hier wieder die Partikelfraktion mit einer Korngrößer ≤ 0,8 mm betrachtet, so kann beim Mahlen mit einzelnem Austrittsspalt und in Folge einer Verlängerung der Verweildauer des Materials in der Hammermühle eine größere Ausbeute an Partikeln im Zielkornbereich erreicht werden, eine Erhöhung gemäß obigem Diagramm auf bis zu 90% wurde beobachtet. Damit einhergeht aber auch eine deutliche Zunahme des Feinmaterialanteils, wobei als Feinmaterial beispielsweise Partikel mit einer Korngröße ≤ 0,2 mm angesehen werden können. Sollte ein zu hoher Feinanteil nicht gewünscht sein, darf die Siebgröße nicht zu klein gewählt werden.

Wie vorstehend zu den Figuren 1 und 2 bereits beschrieben, wird in der Siebeinrichtung 6 die der Hammermühle 4 entnommene erste Partikelfraktion gesiebt. Es wird eine zweite und eine dritte Zielfraktion gebildet, wobei wie beschrieben die dritte Zielfraktion Partikel mit einer Korngröße, die größer als die Zielkorngröße der gewünschten Rezyklatpartikel ist, enthält. Diese dritte Partikelfraktion kann erneut zur Hammermühle 4 zum nochmaligen Mahlen zurückgeführt werden.

In einem weiteren Versuch wurde die Effizienz eines zweiten Mahlvorgangs in Bezug auf die Ausbeute geeigneten Mahlguts untersucht, das heißt, dass das zu mahlende Material in der Hammermühle ein erstes Mal gemahlen und anschließend die erste Partikelfraktion in der Siebeinrichtung klassiert wurde, wonach die dritte Partikelfraktion zur Hammermühle zurückgeführt wurde und ein zweites Mal gemahlen wurde, wonach erneut in der Siebeinrichtung klassiert wurde. Untersucht wurde dabei ein Quarzkomposit-Material vom Typ Cristalite^{®}.

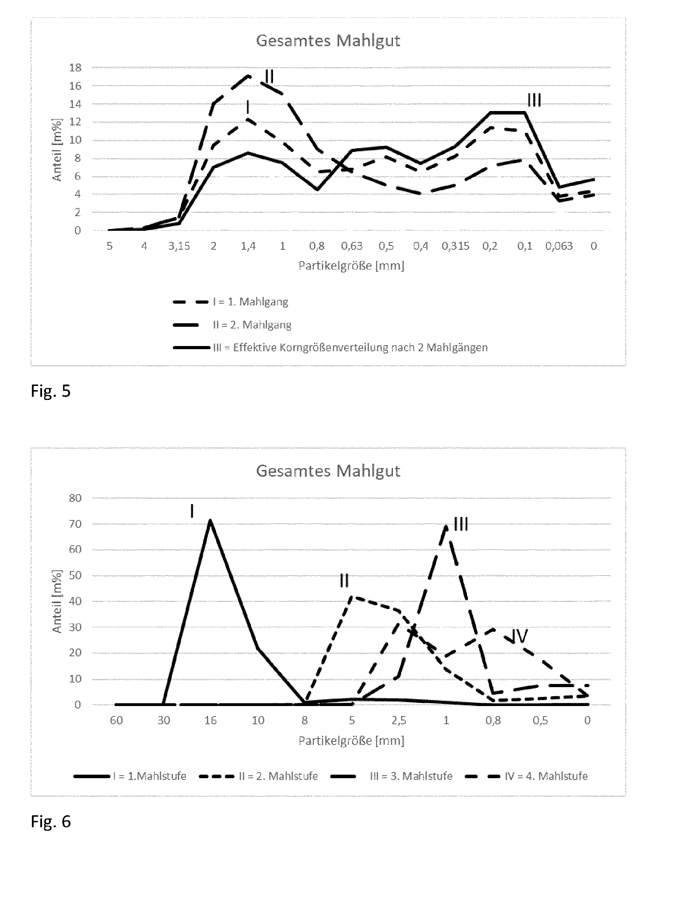

Die Ergebnisse sind in Figur 5 gezeigt. Aufgetragen ist auch hier wiederum längs der Abszisse die Partikelgrößenverteilung in mm und längs der Ordinate der jeweilige prozentuale Anteil.

Die mit I gekennzeichnete Kurve zeigt die Partikel- oder Korngrößenverteilung nach dem ersten Mahlgang, die mit II gekennzeichnete Kurve die Partikel- oder Korngrößenverteilung nach dem zweiten Mahlgang, und die mit III gekennzeichnete Kurve die effektive Partikel- oder Korngrößenverteilung nach beiden Mahlgängen.

Im ersten Mahlgang ergibt sich eine Korngrößenverteilung, bei der bereits ein beachtlich großer Partikelanteil im Zielkorngrößenbereich, also ≤ 0,8 mm, liegt.

Im zweiten Mahlgang wird das aus dem ersten Mahlgang stammende Partikelvolumen, das > 0,8 mm war, erneut in der Hammermühle vermahlen, das heißt, dass das Oberkorn aus dem ersten Mahlgang erneut aufgegeben wurde. Wie durch die Kurve II dargestellt ist, ergibt sich auch bei diesem Mahlgang eine Partikelfraktion mit Partikeln < 0,8 mm, wie auch eine Partikelfraktion enthaltend nach wie vor größere Partikel. Das Zerkleinerungsverhältnis in diesem zweiten Mahlgang ist jedoch geringer als im ersten Mahlgang.

Jedoch zeigt sich, dass durch Rückführung des Oberkorns, also der dritten Fraktion gemäß vorstehender Figurenbeschreibung, eine erneute Ausbeute an im Zielkorngrößenbereich liegenden Partikeln erhalten wird.

Dies zeigt sich auch anhand der mit III gekennzeichneten Kurve, die die effektive Korngrößenverteilung nach zwei Mahldurchgängen zeigt. Der weit überwiegende Anteil des erhaltenen Mahlguts nach zwei Mahldurchgängen liegt bereits im gewünschten Korngrößenbereich ≤ 0,8 mm, und dort primär im gewünschten Korngrößenintervall zwischen 0,8 - 0,2 mm. Das heißt, dass durch mehrmalige Wiederauftragung des Oberkorns, also der dritten Partikelfraktion, eine kontinuierliche Erhöhung der Ausbeute erreicht werden kann, bis hin zu annähernd 100%.

Neben Versuchen unter erfindungsgemäßer Verwendung einer Hammermühle wurden auch ein weiteres Mahlverfahren zur Zerkleinerung von Quarzkomposit-Formteilen untersucht. Hierbei wurde eine mehrstufige Zerkleinerung mittels eines Walzenbrechers und einer Walzenmühle vorgenommen. Es erfolgte ein 4-stufiges Mahlen.

In der ersten Mahlstufe wurden mittels eines Backenbrechers vom Typ BB 400/250 der Firma Merz Aufbereitungstechnik GmbH vorzerkleinerte Formteilstücke mit einer Maximallänge von 30 cm gebrochen, der Brecherspalt betrug 20 mm.

In einer zweiten Mahlstufe wurde das über den Brecherspalt abgezogene Mahlgut der ersten Mahlstufe in einem Walzenbrecher mit Pyramidennockenprofil vom Typ WBG 5/4 der Firma Merz Aufbereitungstechnik GmbH gemahlen, der Brecherspalt betrug hier 1,0 mm.

Das Mahlgut aus der zweiten Mahlstufe, das den Brecherspalt passiert hat, also der Feinbruch aus Mahlstufe zwei, wurde sodann in einer Walzenmühle vom Typ WBP 6/4 der Firma Merz Aufbereitungstechnik GmbH weitergemahlen, der Mahlspalt wurde zu 1,5 mm eingestellt.

In einer vierten Mahlstufe wurde sodann das Mahlgut, das den Mahlspalt in Mahlstufe drei passiert hat, also der dort erhaltene Feinbruch, erneut in der Walzenmühle gemahlen, der Brecherspalt wurde dann aber auf 0,5 mm eingestellt.

Die einzelnen Mahlergebnisse wurden jeweils hinsichtlich der Partikelgrößen klassiert, die Ergebnisse sind in Figur 6 dargestellt.

Die mit I gekennzeichnete Kurve zeigt die Partikelgrößenverteilung des aus der ersten Mahlstufe stammenden Mahlguts an. Die mit II gekennzeichnete Kurve zeigt die Partikelgrößenverteilung des aus der zweiten Mahlstufe erhaltenen Mahlguts an. Die mit III gekennzeichnete Kurve zeigt die Partikelgrößenverteilung des aus der dritten Mahlstufe erhaltenen Mahlguts an. Die mit IV gekennzeichnete Kurve zeigt die Partikelgrößenverteilung des aus der vierten Mahlstufe erhaltenen Mahlguts an.

In der ersten Mahlstufe werden die Formteilstücke, resultierend aus dem großen Brecherspalt, nur grob zerkleinert, ersichtlich bildet sich hier nahezu kein Partikelanteil, der im Zielkorngrößenbereich, also bevorzugt ≤ 0,8 mm liegt. Die Ausbeute an Rezyklatpartikeln im Zielkornbereich beträgt hier nur ca. 0,3% des aufgegebenen Gesamtmaterials.

In der zweiten Mahlstufe wurde nur der aus der ersten Mahlstufe stammende, den Brecherspalt passierende Anteil gemahlen. Es zeigt sich, dass in der zweiten Stufe eine weitere Zerkleinerung möglich ist, jedoch zeigt sich auch hier nur ein fast vernachlässigbarer Partikelanteil, der im Zielkornbereich ≤ 0,8 mm liegt. Die Ausbeute an Partikeln ≤ 0,8 mm betrug ca. 5,9%.

Der Mahlgutanteil, der den Brecherspalt der Mahlstufe zwei passiert hat, wurde sodann in der dritten Mahlstufe in einer Walzenmühle mit einem Mahlspalt von 1,5 mm Weite gemahlen. Das Ergebnis ist mittels der Kurve III gezeigt.

Auch hier zeigt sich ein hoher Peak im Korngrößenbereich zwischen ca. 2,5 - 8 mm, in diesem Bereich fällt nahezu das gesamte Material an. Demgegenüber ist auch hier nur ein geringer Partikelanteil, der im Zielkornbereich ≤ 0,8 mm liegt, erhalten worden.

In der vierten Mahlstufe wurde sodann der in der dritten Mahlstufe erhaltene Partikelanteil, der den Brecherspalt passiert hat, ein weiteres Mal in der Walzenmühle gemahlen, nun jedoch mit einem kleineren Brecherspalt von 0,5 mm. Das Mahlergebnis ist über die Kurve IV gezeigt. Hier ergibt sich eine breitere Korngrößenverteilung im Bereich ≤ 2,5 mm, das heißt, dass eine weitere Zerkleinerung stattgefunden hat. Auch nimmt der Anteil an Partikeln im Zielkornbereich ≤ 0,8 mm zu. Dennoch beträgt die Ausbeute an Material im Zielkornbereich nur ca. 46%. Weiterhin ist festzustellen, dass der Anteil an gröberem Material im Vergleich zur dritten Mahlstufe etwas zugenommen hat. Das ist auf Brikettierungen zurückzuführen, die bei diesem scherenden Mahlverfahren auftreten. Das verklebte, brikettierte Material hat eine höhere Korngröße als das Ursprungsmaterial aus der dritten Mahlstufe.

Das heißt, dass am Ende des vierstufigen Mahlprozesses nur ein Bruchteil des ursprünglich aufgegebenen Materials überhaupt ausgebeutet werden kann, nachdem innerhalb der einzelnen Mahlstufen jeweils das verarbeitete Mahlgut kontinuierlich mengenmäßig reduziert wurde, da nur jeweils der das entsprechende Sieb respektive den Spalt passierende Anteil weiterverarbeitet wurde. Um überhaupt zu einem Mahlgut, das einigermaßen zu einer akzeptablen Ausbeute führt, zu gelangen, waren vorliegend drei vorangehende Mahlvorgänge erforderlich. Das in diesem vierten Mahlschritt aufgegebene Material hatte bereits beachtlich kleine, maximale Korngröße, resultierend aus der dritten Mahlstufe mit einem Brecherspalt von 1,5 mm. Selbst beim Mahlen dieses bereits extrem vorzerkleinerten Materials (Ausgangsmaterial waren wie gesagt die im ersten Mahlschritt aufgegebenen Formteilstücke mit einer Länge von ca. 30 cm) wird nur eine Ausbeute von, versuchsgemäß, ca. 46% erreicht, das heißt, dass über die Hälfte des erhaltenen Mahlguts nicht im Zielkornbereich liegt.

Darüber hinaus wurde, einerseits bereits in der dritten Mahlstufe, andererseits aber auch in der vierten Mahlstufe, eine Verklumpung bzw. Brikettierung des Mahlguts, also des Kompositgranulats festgestellt, was letztlich zur erheblichen Verschlechterung der Ausbeute an Material im Zielkornbereich führt. Diese Verklumpung oder Brikettierung resultiert, wie bereits ausgeführt, aus einer Verklebung des in der Walzenmühle durch Scherung beanspruchten Materials, was zu einer starken Erwärmung und einer Erweichung der Polymermatrix, also des Harzbindemittels und daraus resultierend zu einem Verkleben der Partikel führt.

Dem gegenüber erlaubt das erfindungsgemäße Verfahren in einem einzigen Mahlschritt ausgehend von groben, vorzerkleinerten Formteilstücken bevorzugt mit einer Länge von maximal 30 cm die Bildung einer beachtlich großen Zielpartikelfraktion, also einer Fraktion mit Partikeln, die beispielsweise ≤ 1,0 mm oder ≤ 0,8 mm sind, je nachdem wie die maximale Zielkorngröße definiert ist. Darüber hinaus zeigt das erfindungsgemäße Verfahren den Vorteil, dass es zu keiner Brikettierung, also Verklumpung kommt, das heißt, dass das nicht im Zielkorngrößenbereich liegende Material ohne Probleme erneut vermahlen werden kann. Auch kann ein kontinuierlicher, längerer Mahlprozess durchgeführt werden, da es aufgrund der Schlagbeanspruchung des Mahlguts nicht zu einem hohen Energieeintrag kommt, anders als bei einer Scherbeanspruchung, wie sie z.B. die oben beschriebenen Mühlentypen als Zerkleinerungsverfahren nutzen.

Daher kann mit dem erfindungsgemäßen Verfahren unter Verwendung einer Hammermühle eine effiziente und wirtschaftlich zweckmäßige Herstellung eines partikulären Rezyklats aus Quarzkomposit durchgeführt werden.

Das hergestellte Rezyklat, das wie gesagt zweckmäßigerweise eine maximale Korngröße aufweist, die der maximalen Korngröße des bei der Neuherstellung eines Formteils, insbesondere einer Küchenspüle verwendeten anorganischen oder organischen Füllstoffs, beispielsweise Quarzsand, entspricht, ist denkbar einfach. Es ist lediglich erforderlich, die Rezyklatpartikel vor dem Einbringen in die Gießmasse vorzubehandeln. Wie ausgeführt enthalten die Rezyklatpartikel auch zu einem gewissen Umfang die polymere Bindemittelmatrix, also eine Acrylmatrix, die, da die nicht vorbehandelten Rezyklatpartikel in die Gießmasse eingebracht werden, in dem dort enthaltenen monomeren Acrylat leicht quellen, was zu einer Erhöhung der Viskosität der Gießmasse führt. Um eine Veränderung der rheologischen Eigenschaften der Gießmasse oder eines Zwischenprodukts, beispielsweise der Farbpaste, der das Rezyklat zugegeben werden kann, zu vermeiden, müssen die Rezyklatpartikel lediglich mit einer geeigneten Menge monomeren Acrylats vorgequollen werden. Das heißt, dass zu dem Rezyklatgranulat eine entsprechende Menge an monomerem Acrylat zugegeben wird, sodass die Partikel quellen können, wobei die Quellung in der Regel nach spätestens 24 Stunden abgeschlossen ist. Der Verlauf der Quellung kann rheologisch verfolgt werden.

Die derart vorbehandelten Rezyklatpartikel werden sodann der Gießmasse entweder direkt als eigenständiges Zwischenprodukt oder z. B. der Farbpaste zugegeben, die dann der Gießmasse zugeführt wird. Die Gießmasse kann sodann wie eine gewöhnliche Gießmasse im Formguss verarbeitet werden, enthält aber zu einem beachtlichen Anteil rezyklierte, also wiederverwendete Füllstoffe.

Wenngleich im Beispiel in der Siebeinrichtung 6 sowohl die erste Partikelfraktion in die Partikelfraktionen PF2 und PF3 getrennt wird und auch die zweite Partikelfraktion PF2 in die Partikelfraktionen PF4 und PF5 getrennt wird, also zwei Siebstufen vorgesehen sind, wäre es auch denkbar, für die Trennung von PF2 in PF4 und PF5 eine weitere separate Siebeinrichtung zu verwenden, der die zweite Partikelfraktion PF2 von der Siebeinrichtung 6 über eine Transporteinrichtung zugeführt wird.

## Patentansprüche

1. Verfahren zur Herstellung eines partikulären Rezyklats aus Quarzkomposit durch Zerkleinern von Quarzkomposit-Formteilen aus einer Polymermatrix mit darin eingebetteten anorganischen und optional zusätzlich organischen Füllstoffpartikeln, bei dem vorzerkleinerte Formteilstücke in einer Hammermühle (4) unter Bildung von das Rezyklat bildenden Partikeln zerkleinert werden, wobei über ein Sieb eine erste Partikelfraktion (PF1) mit einer maximalen Korngröße, die größer ist als die Zielkorngröße der das Rezyklat bildenden Partikel, aus der Hammermühle (4) abgezogen wird, wonach in einer nachgeschalteten Siebeinrichtung (6) aus der ersten Partikelfraktion (PF1) eine zweite Partikelfraktion (PF2) enthaltend das Rezyklat bildende Partikel mit einer Korngröße, die gleich oder kleiner der Zielkorngröße ist, abgezogen wird und von einer dritten Partikelfraktion (PF3) enthaltend Partikel, die größer als die Zielkorngröße sind, getrennt wird.

2. Verfahren nach Anspruch 1, **dadurch gekennzeichnet, dass** über ein Sieb eine Partikelfraktion enthaltend das Rezyklat bildende, eine maximale Zielkorngröße aufweisende Partikel abgezogen wird.

3. Verfahren nach Anspruch 2, **dadurch gekennzeichnet, dass** die Zielkorngröße 1,0 mm oder 0,8 mm beträgt.

4. Verfahren nach einem der vorangehenden Ansprüche, **dadurch gekennzeichnet, dass** die maximale Korngröße 5 mm oder 4 mm beträgt.

5. Verfahren nach einem der vorangehenden Ansprüche, **dadurch gekennzeichnet, dass** das Sieb zur Gewinnung der ersten Partikelfraktion (PF1) ein Stabrostsieb ist.

6. Verfahren nach einem der vorangehenden Ansprüche, **dadurch gekennzeichnet, dass** die dritte Partikelfraktion (PF3) zur Hammermühle (4) für eine weitere Zerkleinerung zurückgeführt wird.

7. Verfahren nach einem der vorangehenden Ansprüche, **dadurch gekennzeichnet, dass** die Überführung der in der Hammermühle (4) zerkleinerten Partikel der ersten Partikelfraktion (PF1) zur Siebeinrichtung (6) und/oder der Partikel der dritten Partikelfraktion (PF3) aus der Siebeinrichtung (6) zurück zur Hammermühle (4) manuell oder über eine Transporteinrichtung erfolgt.

8. Verfahren nach einem der vorangehenden Ansprüche, **dadurch gekennzeichnet, dass** in der Siebeinrichtung (6) oder einer weiteren Siebeinrichtung aus der zweiten Partikelfraktion (PF2) eine vierte Partikelfraktion (PF4) mit einer maximalen Korngröße, die kleiner als die Zielkorngröße ist, durch Sieben gebildet und abgezogen wird, so dass eine fünfte Partikelfraktion (PF5) enthaltend die das Rezyklat bildenden Partikel verbleibt und abgezogen wird.

9. Verfahren nach Anspruch 8, **dadurch gekennzeichnet, dass** die maximale Korngröße der vierten Partikelfraktion (PF4) 0,1 mm oder 0,2 mm beträgt.

10. Verfahren nach einem der vorangehenden Ansprüche, **dadurch gekennzeichnet, dass** zum Sieben der ersten Partikelfraktion (PF1) und/oder zum Sieben der zweiten Partikelfraktion (PF2) jeweils ein Maschensieb verwendet wird.

11. Verfahren nach einem der vorangehenden Ansprüche, **dadurch gekennzeichnet, dass** Formteilstücke (3) enthaltend in einer Polymermatrix eingebettete anorganische und/oder Füllstoffpartikel mit einem Anteil von ≥ 60 Gew.%, insbesondere von ≥ 65 Gew.% verwendet werden.

12. Verfahren nach einem der vorangehenden Ansprüche, **dadurch gekennzeichnet, dass** die vorzerkleinerten Formteilstücke (3) eine maximale Länge von 40 cm, insbesondere von 30 cm aufweisen.

13. Verfahren nach einem der vorangehenden Ansprüche, **dadurch gekennzeichnet, dass** die Formteile zur Bildung der Formteilstücke (3) manuell oder mittels einer Zerkleinerungsvorrichtung automatisch zerkleinert werden.

14. Verfahren nach einem der vorangehenden Ansprüche, **dadurch gekennzeichnet, dass** die Formteilstücke (3) manuell oder mittels eine Transporteinrichtung (2) automatisch der Hammermühle (4) zugeführt werden.

15. Verfahren nach einem der vorangehenden Ansprüche, **dadurch gekennzeichnet, dass** als Formteile Spülen verwendet werden.

16. Verwendung eines partikulären Rezyklats umfassend die Schritte:
Bereitstellen eines Rezyclats hergestellt nach Anspruch 1 oder nach Anspruch 1 und einem der Ansprüche 2 bis 15 und Zugeben des Recyclats als Zuschlag zu einer Gießmasse zur Herstellung eines Quarzkomposit-Formteils, insbesondere einer Spüle.

## Claims

1. Process for producing a particulate recyclate from quartz composite by comminuting quartz composite mouldings composed of a polymer matrix with inorganic and/or optionally additionally organic filler particles embedded therein, in which precomminuted pieces of moulding are comminuted in a hammer mill (4) to form particles that form the recyclate, wherein a sieve is used to remove a first particle fraction (PF1) having a maximum grain size greater than the target grain size of the particles that form the recyclate from the hammer mill (4), and then, in a downstream sieving device (6), a second particle fraction (PF2) containing particles having a grain size equal to or less than the target grain size that form the recyclate is removed from the first particle fraction (PF1) and separated from a third particle fraction (PF3) containing particles larger than the target grain size.

2. Process according to Claim 1, **characterized in that** a sieve is used to remove a particle fraction comprising particles having a maximum target grain size that form the recyclate.

3. Process according to Claim 2, **characterized in that** the target grain size is 1.0 mm or 0.8 mm.

4. Process according to any of the preceding claims, **characterized in that** the maximum grain size is 5 mm or 4 mm.

5. Process according to any of the preceding claims, **characterized in that** the sieve for obtaining the first particle fraction (PF1) is a bar sieve.

6. Process according to any of the preceding claims, **characterized in that** the third particle fraction (PF3) is returned to the hammer mill (4) for further comminution.

7. Process according to any of the preceding claims, **characterized in that** the particles of the first particle fraction (PF1) that are comminuted in the hammer mill (4) are transferred to the sieving device (6) and/or the particles of the third particle fraction (PF3) from the sieving device (6) are returned to the hammer mill (4) manually or via a transport device.

8. Process according to any of the preceding claims, **characterized in that**, in the sieving device (6) or a further sieving device, a fourth particle fraction (PF4) having a maximum grain size less than the target grain size is formed from the second particle fraction (PF2) by sieving and removed, so as to leave a fifth particle fraction (PF5) containing the particles forming the recyclate which is removed.

9. Process according to Claim 8, **characterized in that** the maximum grain size of the fourth particle fraction (PF4) is 0.1 mm or 0.2 mm.

10. Process according to any of the preceding claims, **characterized in that** sieving of the first particle fraction (PF1) and/or sieving of the second particle fraction (PF2) is accomplished by using a mesh sieve in each case.

11. Process according to any of the preceding claims, **characterized in that** moulding pieces (3) comprising inorganic and/or filler particles embedded in a polymer matrix with a proportion of ≥ 60% by weight, especially of ≥ 65% by weight, are used.

12. Process according to any of the preceding claims, **characterized in that** the precomminuted moulding pieces (3) have a maximum length of 40 cm, especially of 30 cm.

13. Process according to any of the preceding claims, **characterized in that** the mouldings for formation of the moulding pieces (3) are automatically comminuted manually or by means of a comminution apparatus.

14. Process according to any of the preceding claims, **characterized in that** the moulding pieces (3) are fed automatically to the hammer mill (4) manually or by means of a transport device (2).

15. Process according to any of the preceding claims, **characterized in that** the mouldings used are sinks.

16. Use of a particulate recyclate, comprising the steps of: providing a recyclate produced according to Claim 1 or according to Claim 1 and any of Claims 2 to 15 and adding the recyclate as an admixture to a casting compound for production of a quartz composite moulding, in particular a sink.

## Revendications

1. Procédé de fabrication d'un matériau recyclé particulaire à partir d'un composite de quartz par broyage de pièces moulées en composite de quartz constituées d'une matrice polymère dans laquelle sont incorporées des particules de charge inorganiques et, en option, des particules de charge organiques supplémentaires, dans lequel des morceaux de pièces moulées prébroyés sont broyés dans un broyeur à marteaux (4) pour former des particules constituant le matériau recyclé, une première fraction de particules (PF1) ayant une granulométrie maximale supérieure à la granulométrie cible des particules formant le produit recyclé étant extraite du broyeur à marteaux (4) à travers un tamis, après quoi, dans un dispositif de tamisage (6) monté en aval, on sépare de la première fraction de particules (PF1) une deuxième fraction de particules (PF2) contenant les particules formant le produit recyclé et ayant une granulométrie égale ou inférieure à la granulométrie cible, et une troisième fraction de particules (PF3) contenant des particules qui sont plus grandes que la granulométrie cible.

2. Procédé selon la revendication 1, **caractérisé en ce qu'**une fraction de particules contenant les particules formant le matériau recyclé et présentant une granulométrie cible maximale est extraite au moyen d'un tamis.

3. Procédé selon la revendication 2, **caractérisé en ce que** la granulométrie cible est de 1,0mm ou de 0,8mm.

4. Procédé selon l'une des revendications précédentes, **caractérisé en ce que** la granulométrie maximale est de 5mm ou 4mm.

5. Procédé selon l'une des revendications précédentes, **caractérisé en ce que** le tamis utilisé pour obtenir la première fraction de particules (PF1) est un tamis à barreaux.

6. Procédé selon l'une des revendications précédentes, **caractérisé en ce que** la troisième fraction de particules (PF3) est renvoyée vers le broyeur à marteaux (4) pour être broyée encore davantage.

7. Procédé selon l'une des revendications précédentes, **caractérisé en ce que** le transfert des particules de la première fraction de particules (PF1) broyées dans le broyeur à marteaux (4) vers le dispositif de tamisage (6) et/ou le transfert des particules de la troisième fraction de particules (PF3) du dispositif de tamisage (6) vers le broyeur à marteaux (4) s'effectue manuellement ou via un dispositif de transport.

8. Procédé selon l'une des revendications précédentes, **caractérisé en ce que**, dans le dispositif de tamisage (6) ou dans un autre dispositif de tamisage, une quatrième fraction de particules (PF4) ayant une granulométrie maximale inférieure à la granulométrie cible est formée par tamisage à partir de la deuxième fraction de particules (PF2) et est extraite, de sorte qu'il reste une cinquième fraction de particules (PF5) contenant les particules formant le matériau recyclé, qui est extraite.

9. Procédé selon la revendication 8, **caractérisé en ce que** la granulométrie maximale de la quatrième fraction de particules (PF4) est de 0,1mm ou 0,2mm.

10. Procédé selon l'une des revendications précédentes, **caractérisé en ce qu'**un tamis à mailles est utilisé pour tamiser la première fraction de particules (PF1) et/ou pour tamiser la deuxième fraction de particules (PF2).

11. Procédé selon l'une des revendications précédentes, **caractérisé en ce que** sont utilisées des pièces moulées (3) contenant des particules inorganiques et/ou des particules de charge noyées dans une matrice polymère dans une proportion ≥ 60% en poids, en particulier ≥ 65% en poids.

12. Procédé selon l'une des revendications précédentes, **caractérisé en ce que** les pièces moulées pré-broyées (3) ont une longueur maximale de 40cm, en particulier de 30cm.

13. Procédé selon l'une des revendications précédentes, **caractérisé en ce que** les pièces moulées sont broyées manuellement ou automatiquement au moyen d'un dispositif de broyage pour former les morceaux moulés (3).

14. Procédé selon l'une des revendications précédentes, **caractérisé en ce que** les pièces moulées (3) sont amenées manuellement ou automatiquement au broyeur à marteaux (4) au moyen d'un dispositif de transport (2).

15. Procédé selon l'une des revendications précédentes, **caractérisé en ce que** des éviers sont utilisés comme pièces moulées.

16. Utilisation d'un matériau recyclé particulaire comprenant les étapes suivantes : fourniture d'un matériau recyclé fabriqué selon la revendication 1 ou selon la revendication 1 et l'une des revendications 2 à 15, et ajout du matériau recyclé en tant qu'additif à une masse de coulée pour la fabrication d'une pièce moulée en composite de quartz, en particulier d'un évier.
